# EUROPÄISCHE PATENTANMELDUNG

(11) **EP 4 290 741 A1**
(43) Veröffentlichungstag der Anmeldung: **13.12.2023**
(21) Anmeldenummer: 22177858.2
(22) Anmeldetag: 08.06.2022
(51) Int. Cl.: H02K 3/50, H02K 15/04

(54) **STATOR, STATORVORRICHTUNG, ELEKTRISCHE MASCHINE UND FAHRZEUG**

(71) Anmelder: Valeo eAutomotive Germany GmbH, 91056 Erlangen (DE)
(72) Erfinder: Förster, David, 97616 C/o VSeA, Siemensstr. 15, Bad Neustadt a.d.Saale (DE); Hubert, Markus, 97616 C/o VSeA, Siemensstr. 15, Bad Neustadt a.d.Saale (DE)
(74) Vertreter: Valeo Powertrain Systems

(57) **Zusammenfassung**

Stator (2), aufweisend einen Statorkern (3) mit einer Längsachse (4), mit einer axialen ersten Stirnseite (5) und mit einer der ersten Stirnseite (5) gegenüberliegenden axialen zweiten Stirnseite (6) und eine Vielzahl von Formleitern (7a-d), welche eine Statorwicklung ausbilden und den Statorkern (3) abschnittsweise zwischen der ersten Stirnseite (5) und der zweiten Stirnseite (6) durchsetzen, wobei wenigstens einer der Formleiter (7b-d) als Anschlussformleiter (7c-d) mit einem ersten Abschnitt (9), der an der ersten Stirnseite (5) aus dem Statorkern (3) in axialer Richtung herausragt, und mit einem zweiten Abschnitt (10), der ein freies (11) Ende des Anschlussformleiters (7b-d) umfasst, ausgebildet ist, wobei der Anschlussformleiter (7b-d) zwischen dem ersten Abschnitt (9) und dem zweiten Abschnitt (10) einen dritten Abschnitt (12) mit mehreren Biegungen (13a-c) aufweist, durch welche der dritte Abschnitt (12) bei einer Relativbewegung des zweiten Abschnitts (10) bezüglich des ersten Abschnitts (9) derart elastisch verformbar ist, dass der Relativbewegung eine Rückstellkraft entgegengesetzt wird.

## Beschreibung

Die vorliegende Erfindung betrifft einen Stator, aufweisend einen Statorkern mit einer Längsachse, mit einer axialen ersten Stirnseite und mit einer der ersten Stirnseite gegenüberliegenden axialen zweiten Stirnseite und eine Vielzahl von Formleitern, welche eine Statorwicklung ausbilden und den Statorkern zwischen der ersten Stirnseite und der zweiten Stirnseite durchsetzen, wobei wenigstens einer der Formleiter als Anschlussformleiter mit einem ersten Abschnitt, der an der ersten Stirnseite aus dem Statorkern in axialer Richtung herausragt, und mit einem zweiten Abschnitt, der ein freies Ende des Anschlussformleiters umfasst, ausgebildet ist.

Daneben betrifft die Erfindung eine Statorvorrichtung, eine elektrische Maschine und ein Fahrzeug.

Die DE 10 2020 121 347 A1 offenbart einen Stator, der einen Statorkern und eine Vielzahl von Formleitern aufweist. Formleiter, die zum Kontaktieren mit einer Anschlusseinrichtung vorgesehen sind, weisen ein Anschlusselement an einer Stirnseite des Stators auf.

Statoren, deren Statorwicklung aus Formleitern gebildet ist, bedürfen einer Kontaktierung mit einer Spannungsquelle, um die Statorwicklung zur Erzeugung eines Drehfelds zu bestromen. Da die Formleiter in der Regel als Biegeteile ausgebildet sind, bestehen Fertigungstoleranzen von zur Kontaktierung vorgesehenen Anschlussformleitern hinsichtlich ihrer Lage bezüglich einer Anschlussvorrichtung, über die der Stator mit der Spannungsquelle verbunden wird. Dies gilt insbesondere im Hinblick auf eine automatisierte Fertigung des Stators, wenn dieser in ein Gehäuse eingesetzt wird, an dem die Anschlussvorrichtung ausgebildet ist.

Sind die Fertigungstoleranzen zu groß, kann es bei dem Versuch, die Anschlussformleiter zur Anschlussvorrichtung zu führen, zu einer Beschädigung wegen des dafür erforderlichen Kraftaufwandes kommen. Es ist auch denkbar, dass wegen der Fertigungstoleranzen ein Anschließen an die Anschlussvorrichtung insgesamt unmöglich ist.

Der Erfindung liegt die Aufgabe zugrunde, eine vereinfachte Möglichkeit zum Anschließen einer aus Formleitern gebildeten Statorwicklung eines Stators anzugeben.

Diese Aufgabe wird erfindungsgemäß bei einem Stator der eingangs genannten Art dadurch gelöst, dass der Anschlussformleiter zwischen dem ersten Abschnitt und dem zweiten Abschnitt einen dritten Abschnitt mit mehreren Biegungen aufweist, durch welche der dritte Abschnitt bei einer Relativbewegung des zweiten Abschnitts bezüglich des ersten Abschnitts derart elastisch verformbar ist, dass der Relativbewegung eine Rückstellkraft entgegengesetzt wird.

Der erfindungsgemäße Stator weist einen Statorkern auf. Der Statorkern weist eine Längsachse auf. Der Statorkern weist ferner eine axiale erste Stirnseite auf. Der Statorkern weist ferner eine axiale zweite Stirnseite auf. Die zweite Stirnseite liegt der ersten Stirnseite gegenüber. Der Stator weist ferner eine Vielzahl von Formleitern auf. Die Formleiter bilden eine Statorwicklung aus. Die Formleiter durchsetzen den Statorkern zwischen der ersten Stirnseite und der zweiten Stirnseite. Wenigstens einer der Formleiter ist als Anschlussformleiter ausgebildet. Der Anschlussformleiter weist einen ersten Abschnitt auf. Der erste Abschnitt ragt an der ersten Stirnseite aus dem Statorkern in axialer Richtung heraus. Der Anschlussformleiter weist ferner einen zweiten Abschnitt auf. Der zweite Abschnitt umfasst ein freies Ende des Anschlussformleiters. Der Anschlussformleiter weist zwischen dem ersten Abschnitt und dem zweiten Abschnitt einen dritten Abschnitt auf. Der dritte Abschnitt weist mehrere Biegungen auf. Durch die Biegungen ist der dritte Abschnitt bei einer Relativbewegung des zweiten Abschnitts bezüglich des ersten Abschnitts derart elastisch verformbar, dass der Relativbewegung eine Rückstellkraft entgegengesetzt wird.

Der Anschlussformleiter des erfindungsgemäßen Stators kann - vergleichbar mit einer Feder - elastisch verformt werden, um zusätzliche Bewegungsmöglichkeiten für den das freie Ende umfassenden zweiten Abschnitt zu schaffen. Dadurch kann der Anschlussformleiter mit Vorteil trotz unvermeidlicher Fertigungstoleranzen so relativ zum ersten Abschnitt bewegt werden, dass ein einfaches Anschließen des Anschlussformleiters, beispielsweise an eine bezüglich des Statorkerns lagefest angeordnete Anschlussvorrichtung, ermöglicht wird.

Der Statorkern des erfindungsgemäßen Stators kann aus einer Vielzahl von axial geschichtet angeordneten und/oder gegeneinander elektrisch isolierten Einzelblechen ausgebildet sein. Der Statorkern kann insofern auch als Statorblechpaket aufgefasst werden. Eine aus Formleitern gebildete Statorwicklung kann auch als Haarnadelwicklung (englisch hair pin winding) aufgefasst bzw. bezeichnet werden. Die Formleiter können an der ersten Stirnseite einen Wicklungskopf der Statorwicklung ausbilden. Insbesondere kann sich der erste Abschnitt des Anschlussformleiters in axialer Richtung über den Wicklungskopf hinaus erstrecken. In bevorzugter Ausgestaltung wird der Anschlussformleiter in seinem dritten Abschnitt durch eine jeweilige Biegung um wenigstens 70°, bevorzugt um wenigstens 80°, besonders bevorzugt um wenigstens 90° umgelenkt. In einer weiteren Ausgestaltung wird der Anschlussformleiter in seinem dritten Abschnitt durch eine jeweilige Biegung um wenigstens 120°, bevorzugt um wenigstens 180° umgelenkt.

Bei dem erfindungsgemäßen Stator sind die Biegungen bevorzugt dazu eingerichtet, der Relativbewegung die Rückstellkraft mit einer in Radialrichtung bezüglich der Längsachse wirkenden Kraftkomponente entgegenzusetzen. So kann beispielsweise eine radiale Relativbewegung des zweiten Abschnitts erleichtert werden.

Der erste Abschnitt des Anschlussformleiters kann sich in axialer Richtung zum Statorkern erstrecken.

In vorteilhafter Ausgestaltung ist bei dem erfindungsgemäßen Stator vorgesehen, dass der dritte Abschnitt eine sich an den ersten Abschnitt anschließende erste der Biegungen und eine zwischen der ersten Biegung und dem zweiten Abschnitt liegende zweite der Biegungen aufweist und sich der dritte Abschnitt zwischen der ersten Biegung und der zweiten Biegung axial in eine von der ersten Stirnseite zur zweiten Stirnseite orientierte Richtung erstreckt. Die erste Biegung und die zweite Biegung lenken den dritten Abschnitt insbesondere um wenigstens 150°, bevorzugt um wenigstens 160°, besonders bevorzugt um wenigstens 170° um.

In einer bevorzugten Ausgestaltung kann der Anschlussformleiter den Statorkern durchsetzen und in diesem Abschnitt als I-pin ausgeformt sein. Der Anschlussformleiter kann insbesondere an der zweiten Stirnfläche des Statorkerns herausragen und mit einem weiteren Formleiter verbunden sein.

In einer bevorzugten Ausgestaltung kann der Anschlussformleiter den Statorkern durchsetzen und in diesem Abschnitt als U-pin ausgeformt sein. Der Anschlussformleiter kann insbesondere an der zweiten Stirnfläche des Statorkerns herausragen, einen Bogen aufweisen, an einer anderen Stelle den Statorkern wieder durchsetzen und an der ersten Stirnfläche des Stators herausragen und mit einem weiteren Formleiter verbunden sein.

In bevorzugter Weiterbildung kann ferner vorgesehen sein, dass der dritte Abschnitt zwischen der zweiten Biegung und dem zweiten Abschnitt eine dritte der Biegungen aufweist und sich der dritte Abschnitt zwischen der zweiten Biegung und der dritten Biegung axial in eine von der zweiten Stirnseite zur ersten Stirnseite orientierte Richtung erstreckt. Dabei können die erste Biegung und die dritte Biegung derart angerordnet sein, dass die dritte Biegung durch die Relativbewegung auf die erste Biegung zu oder von der ersten Biegung wegbewegbar ist, wenn die Relativbewegung radial bezüglich der Längsachse gerichtet ist. Die dritte Biegung lenkt den dritten Abschnitt insbesondere um wenigstens 70°, bevorzugt um wenigstens 80°, besonders bevorzugt um wenigstens 90° um

Es kann vorgesehen sein, dass die zweite Biegung und die dritte Biegung in derselben Ebene liegen. Alternative oder zusätzlich können die erste Biegung und die zweite Biegung in derselben Ebene liegen. Die Ebene liegt bevorzugt auf der Längsachse oder parallel zu einer auf der Längsachse liegenden Ebene.

Gemäß einer weiteren Ausgestaltung kann vorgesehen sein, dass sich der dritte Abschnitt zwischen der ersten Biegung und der zweiten Biegung in eine erste Umfangsrichtung bezüglich der Längsachse und zwischen der zweiten Biegung und der dritten Biegung in eine der ersten Umfangsrichtung entgegengesetzte zweite Umfangsrichtung erstreckt, sodass die dritte Biegung durch die Relativbewegung auf die erste Biegung zu oder von der ersten Biegung wegbewegbar ist, wenn die Relativbewegung in Umfangsrichtung bezüglich der Längsachse gerichtet ist. Dadurch kann der zweite Abschnitt besonders leicht in Umfangsrichtung elastisch verformt werden, um eine entsprechende Positionierung des zweiten Abschnitts zu erlauben.

Mit Vorteil kann bei dem erfindungsgemäßen Stator ferner vorgesehen sein, dass der zweite Abschnitt ein das freie Ende umfassendes Befestigungsmittel aufweist, das durch ösenartiges Umbiegen des Anschlussformleiters ausgebildet ist. Das Befestigungsmittel kann dementsprechend einstückig und/oder materialeinheitlich mit dem Anschlussformleiter ausgebildet sein. Dabei ist es bevorzugt, dass der Anschlussformleiter im Bereich des Befestigungsmittel abisoliert ist.

Bevorzugt sind bei dem erfindungsgemäßen Stator mehrere Anschlussformleiter vorgesehen, wobei insbesondere für jede Phase der Statorwicklung ein Anschlussformleiter vorgesehen ist.

Die der Erfindung zugrundeliegende Aufgabe wird ferner gelöst durch eine Statorvorrichtung, aufweisend einen erfindungsgemäßen Stator und eine Anschlussvorrichtung, die für den oder jeden Anschlussformleiter ein Anschlussmittel aufweist, mit welchem der zweite Abschnitt des Anschlussformleiters elektrisch leitfähig kontaktiert ist.

In bevorzugter Ausgestaltung weist die erfindungsgemäße Statorvorrichtung ferner eine Gehäusevorrichtung auf, die einen Aufnahmeraum für den Stator umgibt und einen Gehäuseabschnitt aufweist, in welchem die Anschlussvorrichtung angeordnet ist. Durch die Gehäusevorrichtung kann eine Relativposition des Statorkerns bezüglich der Anschlussvorrichtung fixiert sein. Typischerweise ist der Stator durch einen Presssitz im Aufnahmeraum befestigt.

Im Hinblick auf das ösenartige Befestigungsmittel des zweiten Abschnitts kann mit besonderem Vorteil vorgesehen sein, dass der zweite Abschnitt mittels eines das Befestigungsmittel des zweiten Abschnitts durchsetzenden weiteren Befestigungsmittels mit dem Anschlussmittel kontaktiert ist. Der zweite Abschnitt lässt sich so besonders aufwandsarm an der Anschlussvorrichtung befestigen, weil beispielsweise auf zusätzliche Ösenbauteile, die am freien Ende des Anschlussformleiters angebracht werden, verzichtet werden kann. Das weitere Befestigungsmittel ist beispielsweise ein Bolzen oder eine Schraube.

Die der Erfindung zugrundeliegende Aufgabe wird ferner gelöst durch eine elektrische Maschine zum Antreiben eines Fahrzeugs, umfassend eine erfindungsgemäße Statorvorrichtung und einen drehbar bezüglich des Stators gelagerten Rotor. Die elektrische Maschine kann eine Asynchronmaschine oder eine, insbesondere permanent oder elektrisch erregte, Synchronmaschine sein.

Die der Erfindung zugrundeliegende Aufgabe wird ferner gelöst durch ein Fahrzeug, umfassend eine erfindungsgemäße elektrische Maschine, die zum Antreiben des Fahrzeugs eingerichtet ist.

Alle Ausführungen zum erfindungsgemäßen Stator lassen sich analog auf die erfindungsgemäße Statorvorrichtung, die erfindungsgemäße elektrische Maschine und das erfindungsgemäße Fahrzeug übertragen, sodass die vorgenannten Vorteile auch mit diesen erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines Ausführungsbeispiels der erfindungsgemäßen Statorvorrichtung mit einem ersten Ausführungsbeispiel des erfindungsgemäßen Stators von der Seite;
- Fig. 2: eine Detailansicht des Stators gemäß dem ersten Ausführungsbeispiel in einer Draufsicht;
- Fig. 3: eine Detailansicht des Befestigungsmittels des Anschlussformleiters gemäß dem ersten Ausführungsbeispiel;
- Fig. 4: eine Detailansicht eines Anschlussformleiters gemäß einem zweiten Ausführungsbeispiel; und
- Fig. 5: eine Prinzipskizze eines Ausführungsbeispiels des erfindungsgemäßen Fahrzeugs mit einem Ausführungsbeispiel der erfindungsgemäßen elektrischen Maschine.

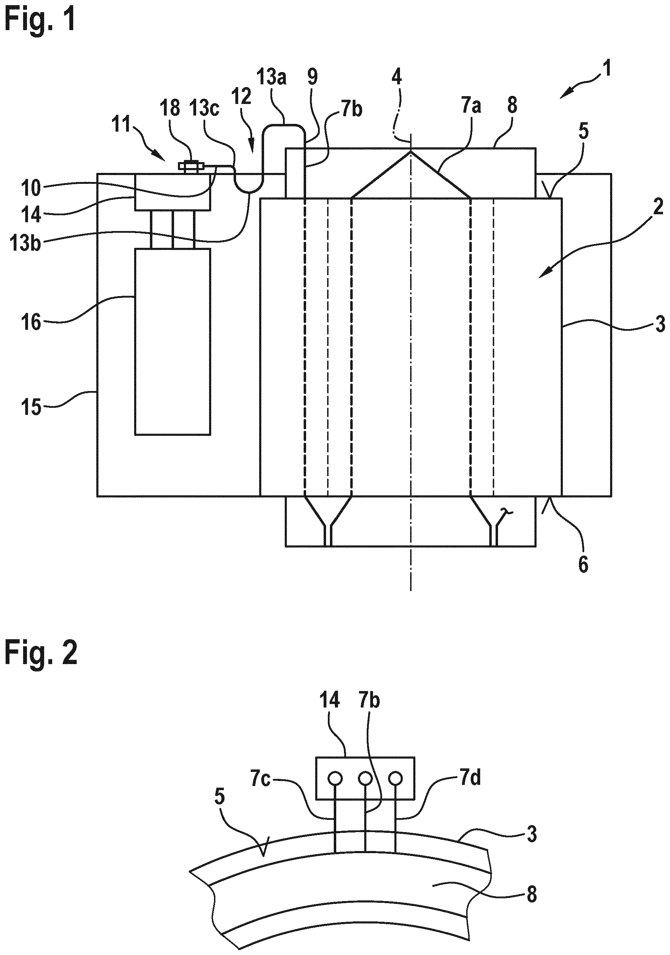

Fig. 1 ist eine Prinzipskizze eines Ausführungsbeispiels einer Statorvorrichtung 1 mit einem ersten Ausführungsbeispiel eines Stators 2 von der Seite.

Der Stator 2 weist einen Statorkern 3 mit einer Längsachse 4, mit einer axialen ersten Stirnseite 5 und mit einer der ersten Stirnseite 5 gegenüberliegenden axialen zweiten Stirnseite 6 auf. Der Statorkern 3 ist hier exemplarisch aus einer Vielzahl von axial geschichtet angeordneten und gegeneinander isolierten Einzelblechen gebildet.

Außerdem weist der Stator 2 eine Vielzahl von Formleitern 7a, 7b, 7c, 7d auf (siehe auch Fig. 2). Die Statorwicklung ist daher als Haarnadelwicklung ausgebildet. Dabei sind von den Formleiter 7a, 7b in Fig. 1 lediglich ein Formleiter 7a und Anschlussformleiter 7b, der mit dem Formleiter 7a an der zweiten Stirnseite 6 elektrisch und mechanisch verbunden ist, gezeigt. Die Formleiter 7a-d durchsetzen den Statorkern 3 zwischen der ersten Stirnseite 5 und der zweiten Stirnseite 6. An der ersten Stirnseite 5 bilden die Formleiter 7a-d einen Wickelungskopf 8 aus.

Der Anschlussformleiter 7b weist einen ersten Abschnitt 9 auf, der an der ersten Stirnseite 5 aus dem Statorkern 3 in axialer Richtung herausragt. Daneben weist der Anschlussformleiter 7b einen zweiten Abschnitt 10 auf, der ein freies Ende 11 des Anschlussformleiters 7b umfasst. Zwischen dem ersten Abschnitt 9 und dem zweiten 10 Abschnitt ist ein dritter Abschnitt 12 mit mehreren Biegungen 13a, 13b, 13c aufweist. Durch die Biegungen 13a-c ist der dritte Abschnitt 12 bei einer Relativbewegung des zweiten Abschnitts 10 bezüglich des ersten Abschnitts 9 derart elastisch verformbar, dass der Relativbewegung eine Rückstellkraft entgegengesetzt wird. Diese Rückstellkraft wird der Relativbewegung zumindest mit einer in Radialrichtung wirkenden Kraftkomponente entgegen.

Im Detail weist der dritte Abschnitt 12 eine sich an den ersten Abschnitt anschließende erste Biegung 13a und eine zwischen der ersten Biegung 13a und dem zweiten Abschnitt 10 liegende zweite Biegung 13b auf. Zwischen der ersten Biegung 13a und der zweiten Biegung 13b erstreckt sich der dritte Abschnitt 12 axial in eine von der ersten Stirnseite 5 zur zweiten Stirnseite 6 orientierte Richtung.

Außerdem weist der dritte Abschnitt 12 zwischen der zweiten Biegung 13b und dem zweiten Abschnitt 10 eine dritte Biegung 13c auf. Zwischen der zwischen der zweiten Biegung 13b und der dritten Biegung 13c erstreckt sich der dritte Abschnitt 12 axial in eine von der zweiten Stirnseite 6 zur ersten Stirnseite 5 orientierte Richtung bzw. in eine der Erstreckungsrichtung zwischen der ersten Biegung 13a und der zwischen Biegung 13b entgegengesetzte Erstreckungsrichtung.

Durch die Biegungen 13a-c wird die elastische Verformbarkeit des dritten Abschnitts 12 bewirkt, sodass die dritte Biegung 13c durch die Relativbewegung auf die erste Biegung 13a zu oder von der ersten Biegung 13a wegbewegbar ist, wenn die Relativbewegung radial bezüglich der Längsachse gerichtet ist.

Fig. 2 ist eine Detailansicht des Stators 2 gemäß dem ersten Ausführungsbeispiel in einer Draufsicht.

Ersichtlich sind neben dem Anschlussformleiter 7b weitere Anschlussformleiter 7c, 7d vorgesehen, die entsprechend dem ersten Anschlussformleiter 7b mit Biegungen 13a-c im dritten Abschnitt 12 ausgebildet sind. Jeder der Anschlussformleiter 7b-d ist dabei einer Phase der Statorwicklung zugeordnet. Die Biegungen 13a-c der Anschlussformleiter 7b-d liegen, wie aus der Draufsicht erkennbar ist, jeweils in einer Ebene. Die Biegungen 13a-c des Anschlussformleiters 7b liegen dabei in einer Ebene, auf der auch die Längsachse 4 liegt, wohingegen die Biegungen 13a-c der Anschlussformleiter 7c, 7d in dazu parallelen Ebenen liegen.

In Fig. 1 sind ferner eine Anschlussvorrichtung 14 und eine Gehäusevorrichtung 15 der Statorvorrichtung 1 gezeigt. Die Gehäusevorrichtung 15 weist einen Aufnahmeraum für den Stator 2 auf, der dort mittels eines Presssitzes befestigt ist. In einem weiteren Gehäuseabschnitt der Gehäusevorrichtung 15 ist die Anschlussvorrichtung 14 angeordnet, sodass die Relativposition des Statorkerns 3 bezüglich der Anschlussvorrichtung 14 festgelegt ist. Durch die elastische Verformbarkeit der Anschlussformleiter 7b-d können Fertigungstoleranzen beim Biegen der Anschlussformleiter 7b-d ausgeglichen werden, wenn der Stator 1 in die Gehäusevorrichtung 15 eingesetzt wurde und eine Verbindung des zweiten Abschnitts 10 mit der Anschlussvorrichtung 14 herzustellen ist.

Fig. 1 zeigt ferner einen Stromrichter 16, hier einen Wechselrichter, der ebenfalls in der Gehäusevorrichtung 15 angeordnet ist. Ersichtlich dient die Anschlussvorrichtung 14 der elektrischen Verbindung des Stromrichters 16 mit der Statorwicklung bzw. den Anschlussformleitern 7b-d, um die Statorwicklung elektrisch zu versorgen.

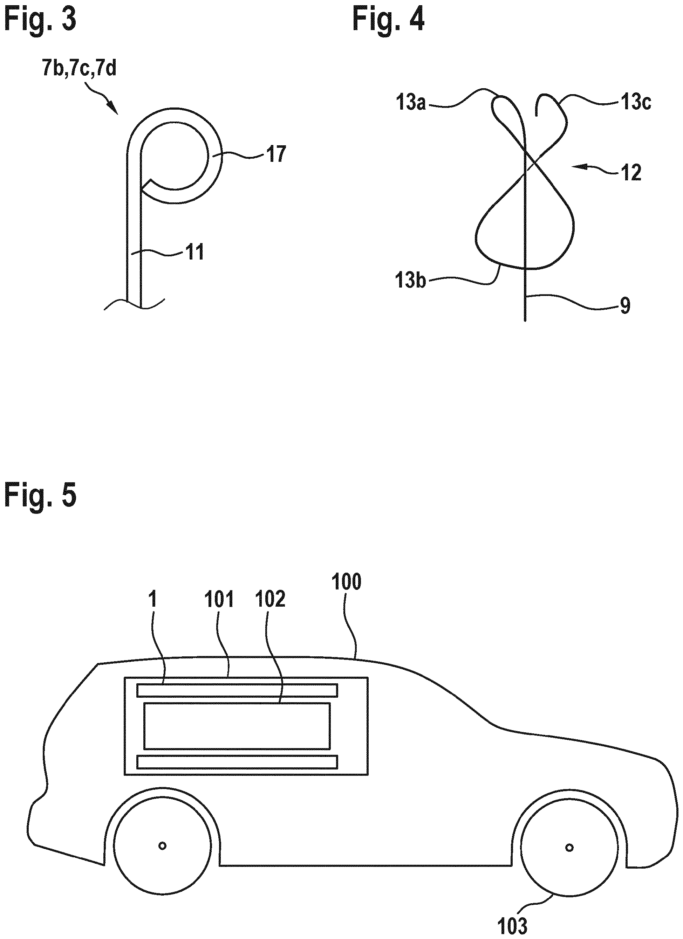

Fig. 3 ist eine Detailansicht eines Befestigungsmittels 17 eines jeweiligen Anschlussformleiters 7b-d gemäß dem ersten Ausführungsbeispiel.

Der zweite Abschnitt 10 weist ein das freie Ende 11 umfassendes Befestigungsmittel 17 auf, das durch ösenartiges Umbiegen des Anschlussformleiters 7b-d, also einstückig und materialeinheitlich mit diesem, ausgebildet ist. Zum Herstellen einer elektrischen Verbindung mit der Anschlussvorrichtung 14 ist der Anschlussformleiter 7b-d im Bereich des Befestigungsmittels 17 abisoliert. Mittels eines weiteres Befestigungsmittels 18 (siehe Fig. 1), beispielsweise einer Schraube oder eines Bolzens, kann der zweite Abschnitt 10 so aufwandsarm an der Anschlussvorrichtung 14 befestigt werden.

Fig. 4 ist eine Detailansicht eines Anschlussformleiters gemäß einem zweiten Ausführungsbeispiel eines Stators 1. Auf das zweite Ausführungsbeispiel lassen sich bis auf die im Folgenden beschriebenen Abweichungen alle Ausführungen zum ersten Ausführungsbeispiel übertragen, wobei gleiche oder gleichwirkende Komponenten mit identischen Bezugszeichen versehen sind.

Beim zweiten Ausführungsbeispiel liegen die Biegungen 13a-c nicht in einer Ebene. Der dritte Abschnitt 12 erstreckt sich vielmehr zwischen der ersten Biegung 13a und der zweiten Biegung 13b in eine erste Umfangsrichtung bezüglich der Längsachse 4 und zwischen der zweiten Biegung 13b und der dritten Biegung 13c in eine der ersten Umfangsrichtung entgegengesetzte zweite Umfangsrichtung erstreckt, sodass die dritte Biegung 13c durch die Relativbewegung auf die erste Biegung 13a zu oder von der ersten Biegung 13a weg bewegbar ist, wenn die Relativbewegung in Umfangsrichtung bezüglich der Längsachse 4 gerichtet ist.

Fig. 5 ist eine Prinzipskizze eines Ausführungsbeispiels eines Fahrzeugs 100 mit einem Ausführungsbeispiel einer elektrischen Maschine 101.

Die elektrische Maschine 101, beispielsweise ein permanent oder elektrisch erregter Synchronmotor oder ein Asynchronmotor, weist eine Statorvorrichtung 1 gemäß einem der zuvor beschriebenen Ausführungsbeispiele sowie einen Rotor 102 auf. Der Rotor 102 ist drehbar bezüglich des Stators 1 gelagert.

Das Fahrzeug 100 weist ferner Räder 103 auf. Die elektrische Maschine 101 ist dazu eingerichtet ist, wenigstens eines der Räder 103 indirekt, beispielsweise über ein Getriebe (nicht gezeigt) anzutreiben oder direkt, beispielsweise in Gestalt eines Radnabenmotors, anzutreiben. Das Fahrzeug 100 kann ferner eine mit dem Rad 103 gekoppelte Achse (nicht gezeigt) aufweisen, die die elektrische Maschine 101 des Fahrzeugs 101 direkt oder indirekt antreibt.

Das erfindungsgemäße Fahrzeug 100 ist ein batterieelektrisches Fahrzeug (BEV), ein mittels einer Brennstoffzelle betriebenes Fahrzeug oder ein Hybridfahrzeug. Im letzteren Fall weist das Fahrzeug 100 ferner einen Verbrennungsmotor (nicht gezeigt) auf.

## Patentansprüche

1. Stator (2), aufweisend einen Statorkern (3) mit einer Längsachse (4), mit einer axialen ersten Stirnseite (5) und mit einer der ersten Stirnseite (5) gegenüberliegenden axialen zweiten Stirnseite (6) und eine Vielzahl von Formleitern (7a-d), welche eine Statorwicklung ausbilden und den Statorkern (3) zwischen der ersten Stirnseite (5) und der zweiten Stirnseite (6) durchsetzen, wobei wenigstens einer der Formleiter (7b-d) als Anschlussformleiter (7c-d) mit einem ersten Abschnitt (9), der an der ersten Stirnseite (5) aus dem Statorkern (3) in axialer Richtung herausragt, und mit einem zweiten Abschnitt (10), der ein freies (11) Ende des Anschlussformleiters (7b-d) umfasst, ausgebildet ist,
**dadurch gekennzeichnet, dass**
der Anschlussformleiter (7b-d) zwischen dem ersten Abschnitt (9) und dem zweiten Abschnitt (10) einen dritten Abschnitt (12) mit mehreren Biegungen (13a-c) aufweist, durch welche der dritte Abschnitt (12) bei einer Relativbewegung des zweiten Abschnitts (10) bezüglich des ersten Abschnitts (9) derart elastisch verformbar ist, dass der Relativbewegung eine Rückstellkraft entgegengesetzt wird.

2. Stator nach Anspruch 1, wobei
die Biegungen (13a-c) dazu eingerichtet sind, der Relativbewegung die Rückstellkraft mit einer in Radialrichtung bezüglich der Längsachse (4) wirkenden Kraftkomponente entgegenzusetzen.

3. Stator nach Anspruch 1 oder 2, wobei
der dritte Abschnitt (12) eine sich an den ersten Abschnitt (9) anschließende erste der Biegungen (13a) und eine zwischen der ersten Biegung (13a) und dem zweiten Abschnitt (10) liegende zweite der Biegungen (13b) aufweist und sich der dritte Abschnitt (12) zwischen der ersten Biegung (13a) und der zweiten Biegung (13b) axial in eine von der ersten Stirnseite (5) zur zweiten Stirnseite (6) orientierte Richtung erstreckt.

4. Stator nach Anspruch 3, wobei
der dritte Abschnitt (12) zwischen der zweiten Biegung (13b) und dem zweiten Abschnitt (10) eine dritte der Biegungen (13c) aufweist und sich der dritte Abschnitt (12) zwischen der zweiten Biegung (13b) und der dritten Biegung (13c) axial in eine von der zweiten Stirnseite (6) zur ersten Stirnseite (5) orientierte Richtung erstreckt.

5. Stator nach Anspruch 4, wobei die erste Biegung (13a) und die dritte Biegung (13c) derart angerordnet sind, dass die dritte Biegung (13c) durch die Relativbewegung auf die erste Biegung (13a) zu oder von der ersten Biegung (13a) weg bewegbar ist, wenn die Relativbewegung radial bezüglich der Längsachse (4) gerichtet ist.

6. Stator nach Anspruch 4 oder 5, wobei die zweite Biegung (13b) und die dritte Biegung (13c) in derselben Ebene liegen.

7. Stator nach einem der Ansprüche 3 bis 6, wobei die erste Biegung (13a) und die zweite Biegung (13b) in derselben Ebene liegen.

8. Stator nach Anspruch 4 oder 5, wobei sich der dritte Abschnitt (12) zwischen der ersten Biegung (13a) und der zweiten Biegung (13b) in eine erste Umfangsrichtung bezüglich der Längsachse (4) und zwischen der zweiten Biegung (13b) und der dritten Biegung (13c) in eine der ersten Umfangsrichtung entgegengesetzte zweite Umfangsrichtung erstreckt, sodass die dritte Biegung (13c) durch die Relativbewegung auf die erste Biegung (13a) zu oder von der ersten Biegung (13a) weg bewegbar ist, wenn die Relativbewegung in Umfangsrichtung bezüglich der Längsachse (4) gerichtet ist.

9. Stator nach einem der vorhergehenden Ansprüche, wobei der zweite Abschnitt (10) ein das freie Ende (11) umfassendes Befestigungsmittel (17) aufweist, das durch ösenartiges Umbiegen des Anschlussformleiters (7b-d) ausgebildet ist.

10. Statorvorrichtung (1), aufweisend
- einen Stator (2) nach einem der vorhergehenden Ansprüche und
- eine Anschlussvorrichtung (14), die für den oder jeden Anschlussformleiter (7b-d) ein Anschlussmittel aufweist, mit welchem der zweite Abschnitt (10) des Anschlussformleiters (7b-d) elektrisch leitfähig kontaktiert ist.

11. Statorvorrichtung nach Anspruch 10, ferner umfassend eine Gehäusevorrichtung (15), die einen Aufnahmeraum für den Stator (2) umgibt und einen Gehäuseabschnitt aufweist, in welchem die Anschlussvorrichtung (14) angeordnet ist.

12. Statorvorrichtung nach Anspruch 10 oder 11, wenn abhängig von Anspruch 9, wobei
der zweite Abschnitt (10) mittels eines das Befestigungsmittel (17) des zweiten Abschnitts (10) durchsetzenden weiteren Befestigungsmittels (18) mit dem Anschlussmittel kontaktiert ist.

13. Elektrische Maschine (101) zum Antreiben eines Fahrzeugs (100), umfassend eine Statorvorrichtung (1) nach einem der Ansprüche 10 bis 12 und einen drehbar bezüglich des Stators (2) gelagerten Rotor (102).

14. Fahrzeug (100), umfassend eine elektrische Maschine (101) nach Anspruch 13, die zum Antreiben des Fahrzeugs (100) eingerichtet ist.
